Europäisches Patentamt

European Patent Office

Office européen des brevets

(11) Publication number : **0 566 362 A2**

(12) **EUROPEAN PATENT APPLICATION**

(21) Application number : 93302860.7

(22) Date of filing : 14.04.93

(51) Int. Cl.⁵ : **H04L 25/03**

(30) Priority : **15.04.92 JP 95035/92**

(43) Date of publication of application :
**20.10.93 Bulletin 93/42**

(84) Designated Contracting States :
**DE FR GB NL**

(71) Applicant : **MATSUSHITA ELECTRIC
INDUSTRIAL CO., LTD.
1006, Oaza Kadoma
Kadoma-shi, Osaka-fu, 571 (JP)**

(72) Inventor : **Ohta, Haruo
2-29-1-401 Deguchi
Hirakata-shi, Osaka (JP)**

(74) Representative : **Wells, David et al
Gill Jennings & Every, Broadgate House, 7
Eldon Street
London EC2M 7LH (GB)**

(54) Adaptive signal equaliser.

(57) An automatic equalizing apparatus includes : an FIR filter (13) having tap coefficients, which includes first delay circuits (1, 2) for delaying an input signal v(t) ; a first comparison circuit (7) for comparing an output signal (26) of the filter (13) with a specified reference level to produce a signal a(t) ; second delay circuits (100, 101) for successively delaying a signal $a_m$ which represents $a(m \cdot u)$ obtained by sampling the signal a(t) every period of time $\underline{u}$ thereby to produce signals $a_{m-i}$ ; a second comparison circuit (8) for comparing the output signal (26) of the filter (13) with the comparison result signal a(t) thereby to produce an error signal e(t) ; and third delay circuits (102, 103) for successively delaying a signal $e_m$ which represents $e(m \cdot u)$ obtained by sampling the error signal e(t) every period of time $\underline{u}$ thereby to produce signals $e_{m-i}$. OR gates (104, 105, 106) receive the signals $a_{m-i}$ and $e_{m-i}$ thereby to obtain an exclusive-OR logic of signals $a_j$ and $e_{j-k}$, where the signals $a_j$ and $e_{j-k}$ are apart at an interval of $k \cdot u$. Integration circuits (107, 108, 109) integrate the exclusive-OR logic of the signals $a_j$ and $e_{j-k}$ thereby to obtain the tap coefficients to be applied to the filter.

Fig. 1

EP 0 566 362 A2

The present invention relates to an automatic equalizing apparatus for automatically equalizing a reception signal or a reproduction signal into a signal in an optimum state in a digital signal reproduction apparatus such as a digital communication receiver, a digital video tape recorder and the like.

In recent years, there has been used an automatic equalizing apparatus for automatically correcting a change of transmission characteristics of a reception signal and equalizing the reception signal into an optimum state in a digital communication receiver.

The most general automatic equalizing apparatus employs a Finite Impulse Response filter (referred to as "FIR filter" hereinafter) in which a filter coefficient is adaptively controlled. As a method for adaptively controlling a filter coefficient, an LMS (Least Mean Square) algorithm, a Zero-forcing algorithm and the like are well known.

In an aspect of an exemplified automatic equalizing apparatus of the above-mentioned type, an analog input signal is converted into a digital signal by means of an analog-to-digital converter so that all the processing operations such as a filtering process and adaptive control of filter coefficients of an FIR filter are performed in a digital signal form. In the above-mentioned digital signal processing construction, it is required to carry out complicated calculations necessary for the filtering operation and the adaptive control of the filter coefficient at least every bit cycle of the input signal.

In a digital signal reproduction apparatus such as a video tape recorder, there is a change in the transmission characteristics in the course from the recording stage to the reproduction stage according to the change of conditions of recording media, recording heads and the like. Therefore, it is desired to use an automatic equalizing apparatus for signal equalization in the reproduction stage to thereby achieve an optimum equalized signal condition.

However, such a digital video tape recorder has a high signal transmission rate with a short signal bit cycle. Therefore, there is a problem that a sufficiently high calculation speed cannot be achieved by means of current semiconductor techniques in the above-mentioned construction of a digital signal processing type, and accordingly an automatic equalizing apparatus cannot be achieved with the conventional construction.

In view of the problem mentioned above, there is disclosed an automatic equalizing apparatus by Mita et al. in the Journal of the Institute of Television Engineers of Japan, Vol. 44, No. 6, pp. 728-735, "A simplified automatic equalizer for digital VTR", issued in 1990, the teachings of which are hereby incorporated by reference. In this conventional apparatus of Mita et al., an FIR filter section is composed of an analog signal processing circuit which includes delay circuits, gain controlled amplifiers and an adder. According to the above-mentioned reference, a calculation for adaptively controlling a filter coefficient is carried out by means of a microcomputer based on intermittently sampled signals. The calculation results of the filter coefficients are converted into analog signals by means of a digital-to-analog converters and the resultant analog signals are supplied to the gain controlled amplifiers.

However, in the above-mentioned construction of the apparatus of Mita et al., the filter coefficients are obtained from the signals intermittently sampled due to a limitation in processing speed of the microcomputer which carries out the calculation for adaptively controlling the filter coefficients. Therefore, the filter coefficients cannot correctly follow a rapid change of the transmission characteristic, which results In a problem that the optimum equalization cannot be effected. Moreover, the microcomputer for carrying out the calculations has a relatively large circuit scale, resulting in increasing the cost of the apparatus. Furthermore, it is necessary to provide a number of digital-to-analog converters equal in amount to the amount of filter coefficients of an FIR filter while the converters are required to have a high accuracy, which results in a large scale and high cost for production of the apparatus.

According to the present invention, there is provided an automatic equalizing apparatus comprising:

filtering means having N number of tap coefficients, said filtering means including first delay means for delaying an input signal v(t) to obtain N signals v(t-k·u), wherein t denotes a time, N a positive integer, k an integer from 0 to N-1, and u denotes a bit cycle;

first comparison means for comparing an output signal of said filtering means with a specified reference level to produce a signal a(t) as a comparison result;

second delay means for successively delaying a signal $a_m$ where the signal $a_m$ represents a(m·u) obtained by sampling the signal a(t) every period of time $\underline{u}$ thereby to produce at least (N+1)/2 signals $a_{a-i}$, wherein m and i denote integers;

second comparison means (8) for comparing the output signal of said filtering means with the comparison result signal a(t) produced by said first comparison means thereby to produce an error signal e(t) as a comparison result;

third delay means for successively delaying a signal $e_m$, where the signal $e_m$ represents e(m·u) obtained by sampling the error signal e(t) every period of time $\underline{u}$ thereby to produce at least (N+1)/2 signals $e_{m-i}$, wherein m and i denote integers;

N number of logic means each receiving the signals $a_{m-i}$ and $e_{m-i}$ produced by said second delay means and third delay means respectively and arranged to produce an exclusive-OR logic output for signals $a_j$ and $e_{j-k}$, the signals $a_j$ and $e_{j-k}$ being separated by an interval of $k \cdot u$, wherein k denotes an integer from n to n+N-1; j and n arbitrary integers; and

N number of integration means each arranged to integrate the output signal from each of said N number of logic means thereby to adjust adaptively the tap coefficients to be applied to said filtering means.

The present invention provides an automatic equalizing apparatus for automatically equalizing a reception signal or a reproduction signal into an optimum state in a digital signal reproduction apparatus such as a digital communication receiver or a digital video tape recorder having a high signal transmission rate. The apparatus performs an optimum equalization sufficiently following a rapid change in transmission characteristics, thereby overcoming the disadvantages of prior art systems.

An automatic equalizing apparatus embodying the invention may have a very simple construction without any large-scale calculation circuit nor any high-accuracy digital-to-analogue converter being necessary.

Preferred embodiments provide an automatic equalizing apparatus which does not malfunction due to a noise in controlling the filter coefficient in the case where the signal is deteriorated due to dropout or the like. The circuit may be provided with means capable of easily varying the speed for controlling the filter coefficient.

The filtering means may further include: N number of multiplying means which receive the N sorts of signals output from said first delay means; and adding means for adding the output signals of said N number of multiplying means.

With the above-mentioned arrangement, adaptive control of each filter coefficient is performed by means of a simple logic circuit and an analog integration circuit to allow an automatic equalization to be effected on a digital signal in a digital communication system or digital signal reproduction system having a high signal transmission rate.

A switch circuit may be inserted between each of N number of logic circuits and each of N number of integration circuits.

With insertion of the above-mentioned switch circuit arrangement, it becomes possible to prevent the malfunction involved in controlling the filter coefficient in the prior art when the signal is deteriorated due to dropout or the like. It is also possible to easily change the control speed of the filter coefficients.

These and other aspects of the present invention will become apparent from the following description taken in conjunction with the preferred embodiment thereof with reference to the accompanying drawings, in which:

Fig. 1 is a block diagram of an automatic equalizing apparatus in accordance with a first embodiment of the present invention;

Fig. 2 is a block diagram of an automatic equalizing apparatus in accordance with a second embodiment of the present invention;

Fig. 3 is a block diagram of a control signal generating section for generating a control signal in the second embodiment;

Fig. 4 is a block diagram of an automatic equalizing apparatus in accordance with a third embodiment of the present invention;

Fig. 5 is a block diagram of a control signal generating section for generating a timing signal and a control signal in the third embodiment;

Figs. 6(A), 6(B) and 6(C) are timing charts of the clock signal, timing signal, and control signal in the third embodiment; and

Fig. 7 a block diagram of another control signal generating section for generating the timing signal and control signal in the third embodiment.

Before describing preferred embodiments, reference is first made to the Zero-forcing algorithm to be adopted in the present invention for adaptively controlling filter coefficients. The zero-forcing algorithm is disclosed by R. W. Lucky in "Techniques for adaptive equalization of digital communication systems" in Bell System Technical Journal, Vol. 45, No. 2, pp.255-286, published on February, 1966, the teachings of which are hereby incorporated by reference.

A method for renewing a filter coefficient using the Zero-forcing algorithm is as follows. Assuming that a j-th tap coefficient of a FIR filter at a time $\underline{n}$ is $C_j(\underline{n})$, the tap coefficient is successively renewed according to the following Equation 1:

$$C_j(n+1) = C_j(n) - r \cdot \sum_{k=n-M+1}^{n} \{sgn(a_{k-j}) \cdot sgn(e_k)\}$$

In Equation 1, after evaluating binary digital data based on the output of the FIR filter at a time $\underline{i}$, it is as-

sumed that $a_i = 1$ when the digital data represents the logic "1" and that $a_i = -1$ when the digital data represents the logic "0". Also in Equation 1, $e_i$ is error data obtained as a difference between the output from the FIR filter and the evaluated output $a_i$ at the time $i$, $r$ is a coefficient for controlling the convergence speed, and sgn(x) is a function expressed by the following Equation 2:

$$sgn(x) = \begin{cases} 1 & (\ x \geq 0\ ) \\ -1 & (\ x < 0\ ) \end{cases}$$

It is noted that M in Equation 1 is a positive integer.

According to the present invention, Equation 1 is modified by setting M = 1 to use the following Equation 3:

$$C_j(n) = C_j(0) - r \cdot \sum_k \{ sgn(a_{k-j}) \cdot sgn(e_k) \}$$

where $C_j(0)$ is the initial value of the filter coefficient.

It is also to be noted that, in the following embodiments, reference is made to the case where an automatic equalizing apparatus employs a three-tap FIR filter having three tap coefficients which are successively renewed according to the calculation of Equation 1.

Before the description proceeds, it is to be noted that, since the preferred embodiments have the same basic structure, like parts are designated by the same reference numerals throughout the drawings.

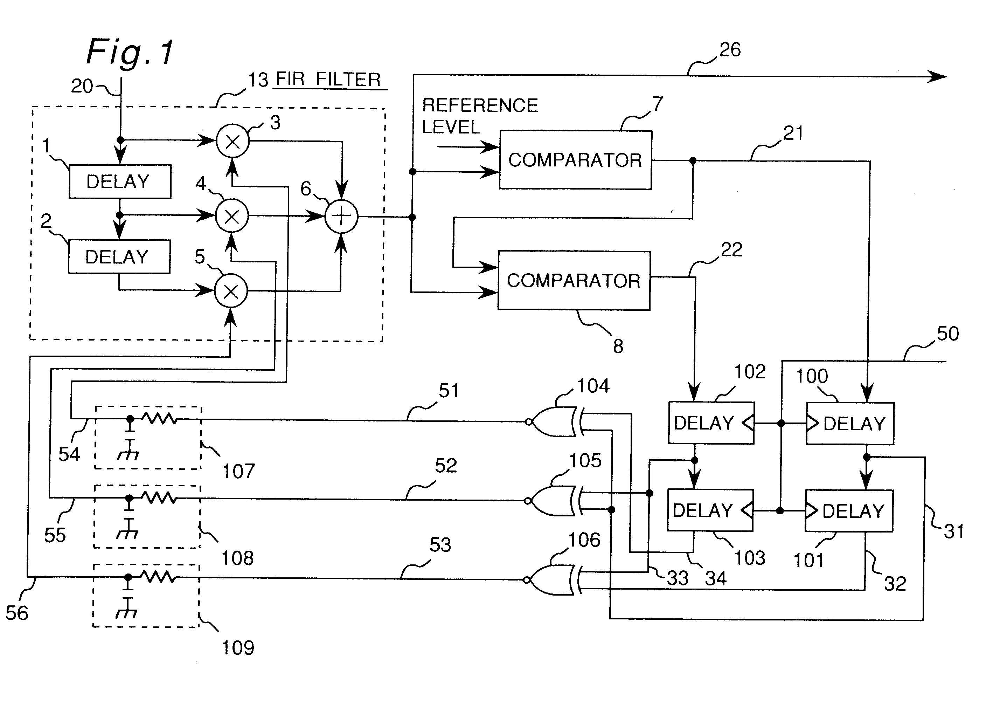

The following describes a first embodiment of the present invention in connection with Fig. 1.

Referring to Fig. 1, a received or reproduced PCM signal 20 is input to a FIR filter 13 which includes a first delay means composed of two delay circuits 1 and 2 for delaying a signal by every one-bit period; a multiplying means composed of three multipliers 3, 4, and 5; and an adder 6. The PCM input signal 20 is directly applied to both the delay circuit 1 and the multiplier 3. The output of the delay circuit 1 delayed by a one-bit period is applied to both the delay circuit 2 and the multiplier 4. The output of the delay circuit 2 delayed further by a one-bit period is applied to the multiplier 5. Then the outputs of the multipliers 3, 4 and 5 are added in the adder 6. The added resultant signal 26 as an output signal from the FIR filter 13 is supplied to first and second comparators 7 and 8. The first comparator 7 compares the output signal 26 from the FIR filter 13 with a reference level thereby to generate a binary evaluation signal 21 which corresponds to $sgn(a_k)$ in Equation 3. The second comparator 8 compares the output signal 26 of the FIR filter 13 with the evaluation result 21 thereby to generate an error signal 22. The error signal 22 corresponds to $sgn(e_k)$ in Equation 3.

The evaluation signal 21 is delayed every one-bit period in a second delay means composed of two delay circuits 100 and 101 according to a clock signal 50 synchronized with the digital data to thereby obtain delayed output signals 31 and 32. Meanwhile, the error signal 22 output from the second comparator 8 is delayed every one-bit period in a third delay means composed of two delay circuits 102 and 103 according to the clock signal 50 synchronized with the digital data to thereby obtain delayed output signals 33 and 34.

Then the delayed signals 31 and 34 are input to a gate circuit 104 to obtain a logic signal 51 as the negation of an exclusive-OR logic of the signal 31 and the signal 34. In more detail, the signal 51 represents the logic "1" when the signal 31 and the signal 34 have the same code, and represents the logic "-1" when the signals 31 and 34 have different codes. The signal 51 is integrated by means of an analog integration circuit 107 to obtain a coefficient signal 54 as the coefficient of the first multiplier 3.

In the same manner, the delayed signals 31 and 33 are input to a gate circuit 105 to obtain a logic signal 52 as the negation of an exclusive-OR logic of the signal 31 and the signal 33. In more detail, the signal 52 represents the logic "1" when the signal 31 and the signal 33 have the same code, and represents "-1" when the signals 31 and 33 have different codes. The signal 52 is integrated by means of an analog integration circuit 108 to obtain a coefficient signal 55 as the coefficient of the second multiplier 4.

Also in the same manner, the delayed signals 32 and 33 are input to a gate circuit 106 to obtain a logic signal 53 as the negation of an exclusive-OR logic of the signal 32 and the signal 33. In more detail, the signal 53 represents the logic "1" when the signal 32 and the signal 33 have the same code, and represents "-1" when the signals 32 and 33 have different codes. The signal 53 is integrated by means of an analog integration circuit 109 to obtain a coefficient signal 56 as the coefficient of the third multiplier 5.

In the above-mentioned case, the signal 51 is equal to $-sgn(a_m) \cdot sgn(e_{m-1})$ as apparent in the description as described hereinbefore, which represents that the signal 51 is equal to the case where $j = -1$ and $k = m$ -

1 in the second term of Equation 3. Meanwhile, the integration circuit 107 calculates in analog the sum of series in Equation 3. Therefore, the output signal 54 of the integration circuit 107 is equivalent to a calculation result of the case where j = -1 in Equation 3. It is noted that the convergence coefficient $\underline{r}$ is determined according to the time constant of the integration circuit 107.

For the same reason as above, the output signal 52 of the gate circuit 105 is equal to the case where j = 0 and k = m in the second term of Equation 3. Therefore, the signal 55 obtained by integrating the signal 52 through the integration circuit 108 is equivalent to a calculation result of the case where j = 0 in Equation 3.

The output signal 53 of the gate circuit 106 is equal to the case where j = 1 and k = m in the second term of Equation 3. Therefore, the signal 56 obtained by integrating the signal 53 through the integration circuit 109 is equivalent to a calculation result of the case where j = 1 in Equation 3.

By way of the above-mentioned operations, each of the multipliers 3, 4, and 5 achieves a coefficient expressed by Equation 3, and therefore the output signal 26 of the FIR filter 13 is made into an optimum equalized signal in any case through the Zero-forcing algorithm as mentioned above.

In the present embodiment described as above, the filter coefficient is controlled with a very simple construction to allow an automatic optimum equalization even in a digital video tape recorder having a high signal transmission rate. The apparatus of the present embodiment can also follow a rapid variation of a transmission characteristic and further includes the advantageous feature of necessitating no large-scale calculation circuit nor high-accuracy digital-to-analog converter.

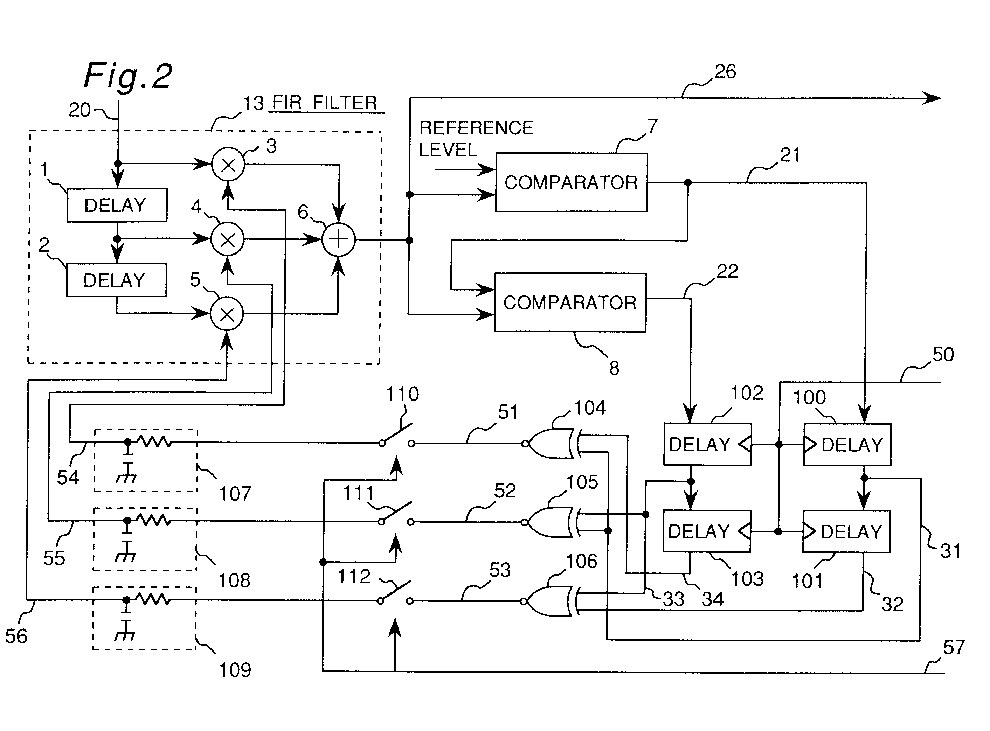

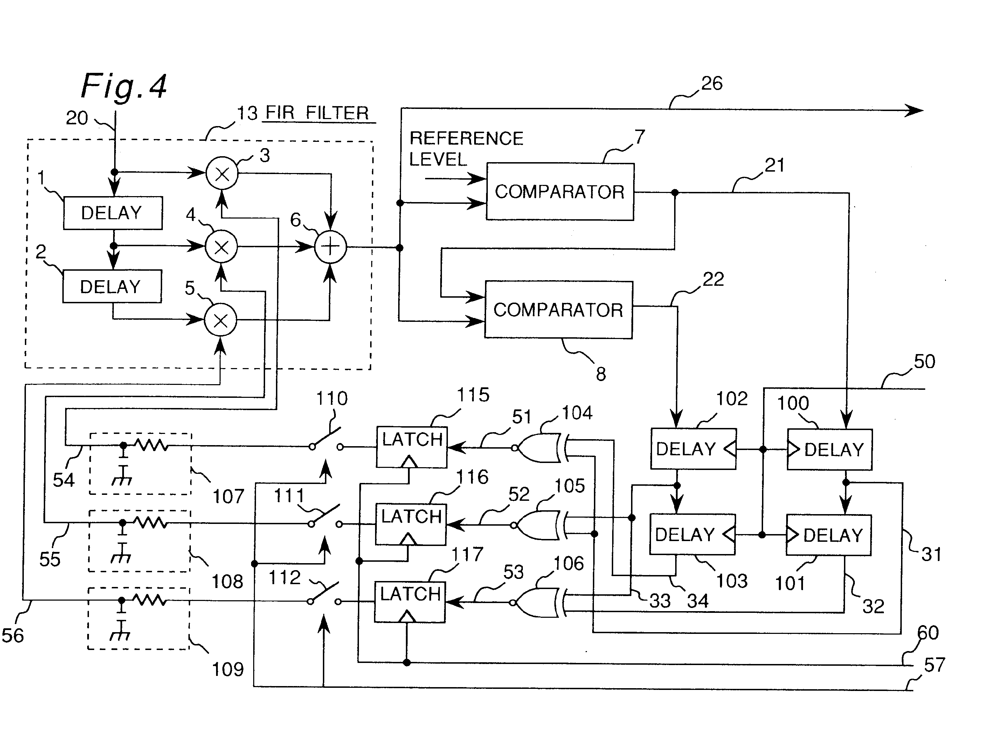

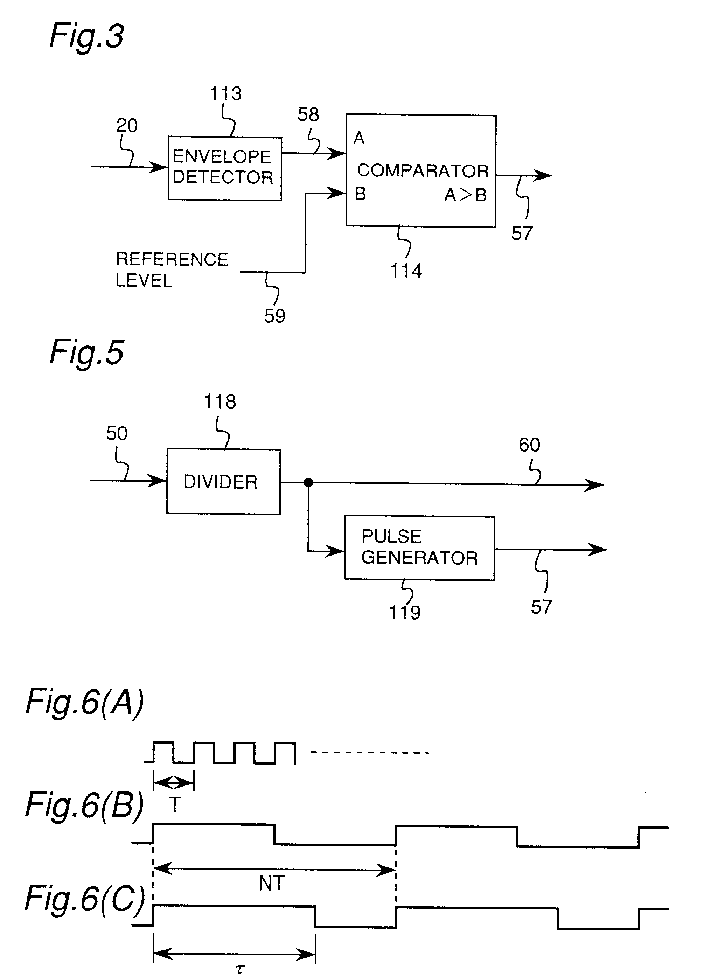

The following describes an automatic equalizing apparatus in accordance with a second embodiment of the present invention with reference to Figs. 2 and 3.

Fig. 2 shows an automatic equalizing apparatus in accordance with a second embodiment of the present invention. In Fig. 2, blocks and signals having the same functions as those in the first embodiment in Fig. 1 are denoted by the same reference numerals. The second embodiment differs from the first embodiment in that switch units 110, 111, and 112 are inserted respectively between the gate circuits (104, 105 and 106) and the integration circuits (107, 108 and 109). The switching operations of the switch units 110, 111, and 112 are controlled by a control signal 57.

When the switch units 110, 111 and 112 are in open state, the signals 54, 55, and 56 hold the values immediately before the switch units are opened. Only when the switch units are closed, the integration circuits 107, 108, and 109 carry out integration of the signals 51, 52 and 53. In other words, no renewal of the filter coefficients is effected and the previous filter coefficients are held. When the switch units are closed, the same operation as in the first embodiment is carried out.

The control signal 57 controls the operations of the switch units 110, 111 and 112 to be opened (in off-state) when the input signal 20 is not in the normal condition.

Fig. 3 shows an exemplified control circuit for generating the control signal 57. Referring to Fig. 3, the amplitude of the envelope of the input signal 20 is detected by an envelope detector 113. The detected envelope amplitude 58 is compared with a reference level 59 by means of a comparator 114. When the envelope amplitude 58 is greater than the reference level 59, the control signal 57 is output so that the switch units 110, 111, and 112 are closed, and when the envelope amplitude 58 is not greater than the reference level 59, the switch units are opened .

With the above-mentioned arrangement, when the amplitude of the input signal 20 is momentarily reduced and noise is increased due to dropout or the like, the switch units 110, 111, and 112 are opened so that the faulty variation of the filter coefficients can be prevented.

The following describes an automatic equalizing apparatus in accordance with a third embodiment of the present invention with reference to Figs. 4 through 7.

Fig. 4 shows an automatic equalizing apparatus in accordance with a third embodiment of the present invention. The third embodiment differs from the second embodiment in that latch circuits 115, 116, and 117 are inserted respectively between the gate circuits (104, 105, and 106) and the switch units (110, 111, and 112). The latch circuits 115, 116, and 117 are provided for latching the logic signals 51, 52 and 53 according to a timing signal 60.

In the third embodiment, the timing signal 60 and the control signal 57 are generated by a control circuit having a construction as shown in Fig. 5.

Referring to Figs. 5 and 6, a clock signal 50 synchronized with digital data as shown in Fig. 6 (A) is divided by N by means of a divider 118 to generate a timing signal 60 as shown in Fig. 6 (B). Meanwhile, the timing signal 60 is applied to a pulse generator 119 to generate a control signal 57 as shown in Fig. 6 (C). The control signal 57 has a pulse duration $\tau$ starting from the starting edge of the timing signal 60. The pulse duration $\tau$ of the control signal 57 is made shorter than one cycle N·T of the timing signal 60 (T: bit cycle).

Consequently, in the third embodiment as shown in Fig. 4, the operations of the switch units 110, 111, and 112 are controlled by the control signal 57 to be closed only in the period $\tau$ within the period N·T. By way of the above-mentioned operation, the convergence coefficient $\underline{r}$ in Equation 1 can be controlled according to the period $\tau$ during which the switch units are closed. In other words, the convergence speed can be increased by increasing the period $\tau$ or decreased by decreasing the period $\tau$. Therefore, the present embodiment has the feature that the convergence speed can be easily controlled by varying the set-up value of the period $\tau$ without varying the time constants of the integration circuits 107, 108, and 109.

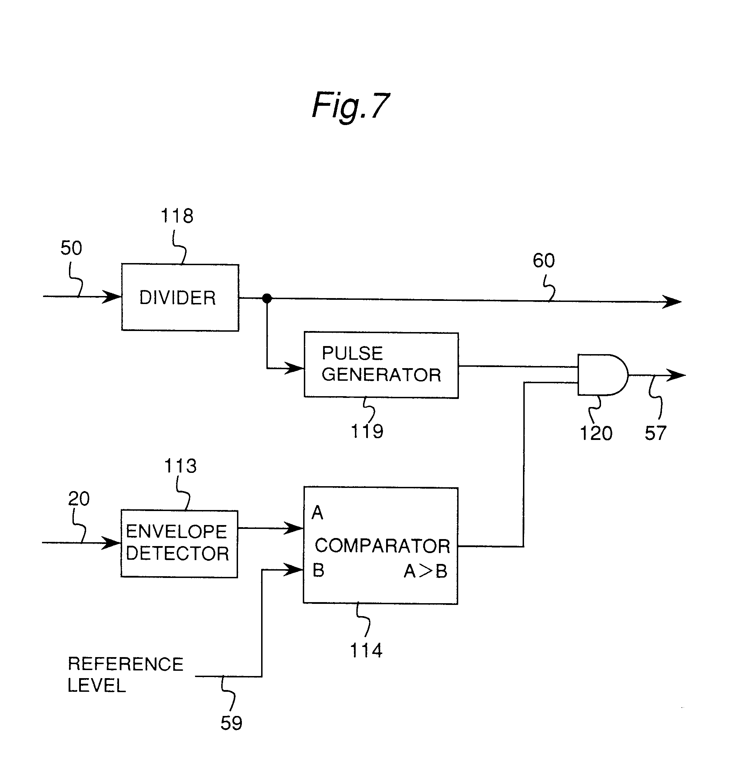

Fig. 7 shows another example of the control signal generating circuit for generating the timing signal 60 and control signal 57 in the third embodiment. The control circuit for generating the timing signal 60 and control signal 57 may have a construction as shown in Fig. 7. The construction shown in Fig. 7 is achieved by incorporating the construction of the second embodiment as shown in Fig. 3 into the aforementioned construction as shown in Fig. 5 to generate the control signal 57 synthesized by means of an AND gate 120. With the above-mentioned arrangement, in addition to the advantageous feature in the case where a control circuit as shown in Fig. 5 is used, there is further an advantageous feature that, when the amplitude of the input signal 20 is momentarily reduced and noise is increased due to dropout or the like, the filter coefficients can be prevented from varying faultily.

Although the signals 31 and 32 are input to the gate circuit 105 in each of the first, second, and third embodiments, combination of the input signals can be changed and the signals 32 and 34 may be input instead. In the above case, the signal 52 is equal to the case where j = 0 and k = m + 1 in the second term of Equation 1, when the operation is equivalent to that in any of the aforementioned embodiments to produce the same effect.

Although each of the first, second, and third embodiments refers to an automatic equalizing apparatus employing a three-tap FIR filter, the amount of taps is not limited to three taps in each of the embodiments. It is noted that, each of the first, second, and third embodiments employing a three-tap coefficient necessitates two signals $a_m$ and $a_{m-1}$ obtained by delaying the evaluation signal as well as two delayed error signals $e_m$ and $e_{m-1}$ in order to calculate three tap coefficients from Equation 3. In general, when the amount of taps is N, there are necessitated at least (N+1)/2 number of delayed evaluation signals and (N+1)/2 number of error data in order to obtain N number of tap coefficients.

## Claims

1.  An automatic equalizing apparatus comprising:

    filtering means (13) having N number of tap coefficients, said filtering means including first delay means (1, 2) for delaying an input signal v(t) to obtain N sorts of signals v(t-k·u), wherein t denotes a time, N a positive integer, k an integer from 0 to N-1, and u denotes a bit cycle;

    first comparison means (7) for comparing an output signal (26) of said filtering means with a specified reference level to produce a signal a(t) as a comparison result;

    second delay means (100, 101) for successively delaying a signal $a_m$, where the signal $a_m$ represents a(m·u) obtained by sampling the signal a(t) every period of time $\underline{u}$ thereby to produce at least (N+1)/2 signals $a_{m-i}$, wherein m and i denote integers;

    second comparison means (8) for comparing the output signal (26) of said filtering means with the comparison result signal a(t) produced by said first comparison means (7) thereby to produce an error signal e(t) as a comparison result;

    third delay means (102, 103) for successively delaying a signal $e_m$, where the signal $e_m$ represents e(m·u) obtained by sampling the error signal e(t) every period of time $\underline{u}$ thereby to produce at least (N+1)/2 signals $e_{m-i}$, wherein m and i denote integers;

    N number of logic means (104, 105, 106) each receiving the signals $a_{m-i}$ and $e_{m-i}$ produced by said second delay means and third delay means respectively and arranged to produce an exclusive-OR logic output for signals $a_j$ and $e_{j-k}$, the signals $a_j$ and $e_{j-k}$ being separated by an interval of k·u, wherein k denotes an integer from n to n+N-1; j and n arbitrary integers; and

    N number of integration means (107, 108, 109) each arranged to integrate the output signal from each of said N number of logic means thereby to adjust adaptively the tap coefficients to be applied to said filtering means.

2.  The automatic equalizing apparatus as claimed in claim 1, wherein said filtering means further includes:

    N number of multiplying means (3, 4, 5) which receive the N signals output from said first delay means; and

    adding means (6) for adding the output signals of said N number of multiply means.

6

3. The automatic equalizing apparatus as claimed in claim 1 or 2, further comprising N number of switch means (110, 111, 112) which are electrically operatively interconnected respectively between said logic means (104, 105, 106) and said integration means (107, 108, 109) for switching the integration of the output signals of said N number of logic means according to a control signal (57) generated by signal generating means.

4. The automatic equalizing apparatus as claimed in Claim 3, wherein said signal generating means comprises: envelope detection means (113) for detecting an amplitude of an envelope of the input signal v(t); and comparison means (114) for comparing an output of the envelope detection means with a specified reference level (59), whereby said N number of switch means are closed only when the amplitude of the envelope is greater than the reference level.

5. The automatic equalizing apparatus as claimed in Claim 3 further comprising N number of latch means which are electrically operatively interconnected respectively between said logic means (104, 105, 106) and said switch means (110, 111, 112) for latching the output signals of said N number of logic means according to a timing signal (60) generated by signal generating means.

6. The automatic equalizing apparatus as claimed in Claim 5, wherein said signal generating means comprises division means (118) for dividing a clock signal (50) synchronized with the bit cycle of the input signal v(t) to obtain the timing signal (60) and pulse generation means (119) for generating the control signal (57) from the timing signal (60) so that said switch means are closed for a specified period corresponding to the pulse duration period of the control signal (57).

7. The automatic equalizing apparatus as claimed in Claim 6, wherein said signal generating means further comprises: envelope detection means (113) for detecting an amplitude of the envelope of the input signal v(t); and comparison means (114) for comparing an output of said envelope detection means with a specified reference level (59), whereby said pulse generation means (119) generates the control signal (57) only when the amplitude of the envelope is greater than the reference level.

## Fig.1

EP 0 566 362 A2

Fig.2

Fig.4

EP 0 566 362 A2

*Fig.3*

20 → | ENVELOPE DETECTOR | 113 → 58 → | A  COMPARATOR  A>B | 114, 57

REFERENCE LEVEL → 59 → B

*Fig.5*

50 → | DIVIDER | 118 → 60

| PULSE GENERATOR | 119, 57

*Fig.6(A)*

*Fig.6(B)* T

*Fig.6(C)* NT

τ

# Fig.7